# FASCICULE DE BREVET EUROPEEN

(11) **EP 3 997 681 B1**
(45) Date de publication et mention de la délivrance du brevet: **28.08.2024**
(21) Numéro de dépôt: 20750315.2
(22) Date de dépôt: 06.07.2020
(51) Int. Cl.: G08B 25/01, H04W 76/50, H04W 4/90, H04M 1/725, H04M 1/247, G08G 1/00, H04M 11/04, G08B 25/00

(54) **APPEL D'URGENCE POUR UN OCCUPANT D'UN VÉHICULE EN SITUATION D'HYPOACOUSIE OU D'APHASIE**
NOTRUF FÜR EINEN INSASSEN EINES FAHRZEUGS, DER AN HYPAKUSIS ODER APHASIE LEIDET
EMERGENCY CALL FOR AN OCCUPANT OF A VEHICLE, SUFFERING FROM HYPOACUSIS OR APHASIA

(30) Priorité: 11.07.2019 FR 1907823
(43) Date de publication de la demande: 18.05.2022
(73) Titulaire: Stellantis Auto SAS, 78300 Poissy (FR)
(72) Inventeur: BOHIN, Franck, 91460 Marcoussis (FR)
(86) Numéro de dépôt international: PCT/FR2020/051194
(87) Numéro de publication internationale: WO 2021/005297

(56) Documents cités:
- EP-A1- 2 259 496
- US-A1- 2005 053 209
- US-A1- 2012 269 330
- MIRIAM CABO ET AL: "Universal Access to eCall System", PROCEDIA COMPUTER SCIENCE, vol. 27, 13 February 2014 (2014-02-13), AMSTERDAM, NL, pages 104 - 112, XP055677877, ISSN: 1877-0509, DOI: 10.1016/j.procs.2014.02.013

## Description

La présente invention appartient au domaine du véhicule connecté. Elle concerne en particulier un procédé et un dispositif de transmission d'un message d'urgence par un véhicule terrestre, la transmission comprenant l'émission d'au moins un paquet dans un réseau de télécommunication, et la mise en place d'un appel d'urgence pour un occupant du véhicule en situation d'hypoacousie ou d'aphasie.

Elle est particulièrement avantageuse dans le cas d'un véhicule automobile ayant subi un accident de la route.

On entend par « véhicule terrestre » tout type de véhicule tel qu'un véhicule automobile, un cyclomoteur, une motocyclette, un robot de stockage dans un entrepôt, etc. On entend par « conduite autonome » d'un « véhicule autonome » tout procédé apte à assister la conduite du véhicule. Le procédé peut ainsi consister à diriger partiellement ou totalement le véhicule ou à apporter tout type d'aide à une personne physique conduisant le véhicule. Le procédé couvre ainsi toute conduite autonome, du niveau 0 au niveau 5 dans le barème de l'OICA, pour Organisation International des Constructeurs Automobiles.

Lorsqu'un véhicule terrestre ou l'un des occupants de ce véhicule subit un incident, il peut être pertinent de mettre en oeuvre un message d'urgence. La diversité des incidents pour lesquels un tel message est pertinent est grande : il peut s'agir d'un accident de la route impliquant le véhicule, d'un malaise d'un des passagers, d'un incident technique lié à un paramètre de fonctionnement du véhicule (tel qu'un blocage du régulateur adaptatif de vitesse), d'une agression d'un occupant du véhicule, etc.

Différentes modalités ont pu être proposées pour la transmission par un véhicule terrestre de tels messages d'urgence. On entend par « message d'urgence » tout type de communication impliquant une transmission d'information. Il peut par exemple s'agir de l'envoi d'un message comprenant des données numériques (binaires par exemple), tout type d'appel sur un réseau de télécommunication, une combinaison d'un appel et d'un message, etc.

Le document US2012269330 décrit permettent d'utiliser un système de navigation pour faciliter les communications entre un centre d'appels et une personne handicapée qui peut avoir des difficultés à entendre ou à parler. Le document MIRIAM CABO ET AL : « Universal Access to eCall System » décrit la gestion de communications avec un centre d'appels. Le document US2005053209 décrit un procédé pour mettre à disposition des participants et d'autres dans un événement d'appel de numéro spécial des informations contenues dans une pluralité de mémoires de données comprenant les étapes consistant à sans ordre particulier fournir la pluralité de mémoires de données. Le document EP2259496 concerne un appareil et méthode pour générer un signal de détresse d'un véhicule afin de prévenir les secours.

En Europe, un message d'urgence habituellement utilisé est l' « eCall ». L'eCall est déclenché soit automatiquement par l'activation de capteurs embarqués, soit manuellement par les occupants du véhicule en détresse. Une fois activé, l'eCall avertit, au moyen des réseaux de communication sans fil, un centre de réception des appels d'urgence (PSAP, Public Safety Answering Point en anglais) le plus approprié et lui fournit des informations de localisation pertinentes, puis transmet un ensemble minimal de données (MSD, Minimum Set of Data en anglais) défini, signalant qu'un incident nécessitant une réponse des services d'urgence s'est produit, et établit une voie audio entre les passagers du véhicule et le PSAP le plus approprié.

Les exigences de fonctionnement relatives à l'eCall présupposent l'utilisation des réseaux mobiles terrestres publics ou PLMN (Public Land Mobile Network en anglais) comme le GSM, l'UMTS ou encore la 5G, tels que spécifiés dans plusieurs normes ETSI et spécifications techniques. La prestation du service eCall dans un réseau sans fil exige des protocoles d'application de haut niveau (HLAP, High Level Application Protocol en anglais). Des contraintes techniques fortes sont présentes quant à la réduction de l'occupation du réseau. En particulier, il est important que les messages d'urgences présentent une compacité maximum afin d'encombrer le moins possible le réseau.

Une bonne organisation des services de secours est primordiale. En particulier, il est très important que les secours puissent adapter leur intervention aux spécificités de l'incident. Pour ce faire, il est généralement pertinent de compléter l'envoi du message d'urgence par un appel d'urgence.

Un tel appel ne peut être mis en place pour des personnes en situation d'hypoacousie ou d'aphasie. Les systèmes existant pour la mise en place d'un appel d'une personne en situation d'hypoacousie ou d'aphasie ne sont pas adaptés aux situations d'urgence.

La présente invention vient améliorer la situation.

A cet effet, un premier aspect de l'invention concerne un procédé de transmission d'un message d'urgence par un véhicule terrestre, comme défini dans la revendication 1.

L'intégration de l'information d'hypoacousie au message d'urgence combinée à la mise en place de l'appel d'urgence avec affichage du texte a pour effet de rationaliser la prise en compte des situations d'urgence pour les personnes en situation d'hypoacousie en ce que cette particularité est identifié dès la détection d'urgence et un appel adapté est automatiquement mis en place.

Les secondes ou minutes actuellement perdues pour identifier l'information d'hypoacousie et surtout pour mettre en place un appel d'urgence adapté sont ainsi avantageusement supprimées.

En outre, l'élément d'information est configuré pour attribuer au paquet une priorité dans le réseau. Dès lors, le message d'urgence, et l'information d'hypoacousie qu'il contient, peut-être traité en priorité pour que les communications liées qui suivent soient routées vers l'entité la plus pertinente. En particulier, la gestion de l'incident est améliorée car l'information d'hypoacousie peut être traitée par des systèmes automatiques, par exemple fondés sur de l'intelligence artificielle, et ainsi se voir attribuer un degré de priorité spécifique. Par exemple, un message d'urgence dans lequel l'information d'hypoacousie est présente peut-être automatiquement transféré vers une entité spécialisée dans ce type de situation, et un protocole automatique adapté mis en oeuvre.

Par ailleurs, la taille de la valeur de catégorie de service d'urgence correspond au meilleur compromis entre la précision requise pour la gestion des priorités et la réduction de l'occupation du réseau. En particulier, l'optimisation de la taille de la valeur de catégorie de service d'urgence rend possible un routage efficace du message d'urgence sans avoir à dégrader la donnée comprenant l'information d'hypoacousie.

On entend par « priorité dans le réseau, la priorité étant relative au caractère urgent du message » toute fonction du réseau consistant à attribuer une action particulière au paquet et/ou au message d'urgence. Par exemple, il peut s'agir de faire passer le ou les paquets correspondant au message d'urgence avant d'autres paquets, d'orienter le message d'urgence vers un dispositif distant spécifique aux messages présentant un caractère d'urgence, etc.

On entend par « hypoacousie » toute situation où une personne présente une acuité auditive diminuée. On entend par « signal de l'appel d'urgence » toute donnée échangée entre le véhicule et le centre de réception des appels d'urgence. Un signal audio, des données (instructions, questions, etc.) générées automatiquement par un dispositif de traitement, par exemple fondé sur de l'intelligence artificielle, du centre de réception des appels d'urgence, la bande sonore d'une vidéo, etc. sont des exemples de signal de l'appel d'urgence.

Dans un mode de réalisation, le signal transcrit en texte sur l'écran du véhicule est un signal audio.

Dans un mode de réalisation, une information d'aphasie de l'occupant est en outre déterminée, la donnée comprend en outre l'information d'aphasie, le procédé comporte alors en outre, après l'étape de déclenchement de l'appel d'urgence, une étape de :
- réception de données textuelles renseignées par l'occupant du véhicule depuis un clavier du véhicule.

En particulier, dans un mode de réalisation, le clavier est compris sur un écran tactile du véhicule. Dans un mode de réalisation, l'écran tactile du véhicule correspond à l'écran du véhicule.

Dans un mode de réalisation, la valeur de catégorie de service d'urgence (EMCV) est d'une taille égale à un octet et présente l'une au moins des configurations suivantes :
- le sixième bit de l'octet est réglé à un ;
- le septième bit de l'octet est réglé à un,
et dans lequel la donnée est comprise dans l'ensemble minimal de données au sens de la norme européenne EN 15722.

Selon l'invention, l'étape de détection de la situation d'urgence comporte une détermination d'une information de type de détection de la situation d'urgence, le type de détection correspondant à une détection automatique de l'urgence ou à une situation d'urgence manuellement renseignée par un occupant du véhicule. En outre, la priorité dans ledit réseau est en outre relative au type de détection de la situation d'urgence.

Ainsi, le message d'urgence et au moins certains des paquets liés audit message peut être orienté avec plus de précision. En particulier, les messages d'urgence générés automatiquement sont beaucoup plus rarement liés à une erreur et peuvent être orienté de manière plus prioritaire. Par ailleurs, l'information relative au type de détection enrichit l'information d'hypoacousie et rend par exemple possible de savoir si un occupant du véhicule est potentiellement apte à comprendre rapidement, par exemple depuis l'extérieur du véhicule, des instructions visant à mettre le véhicule en sécurité.

Dans un mode de réalisation, la situation d'urgence par au moins un premier organe du véhicule est détectée à partir de l'activation d'un système de protection d'occupants du véhicule. En particulier, dans un mode de réalisation, le système de protection d'occupants du véhicule est un système comprenant au moins un airbag.

Un deuxième aspect de l'invention vise un programme informatique comportant des instructions pour la mise en oeuvre du procédé selon le premier aspect de l'invention, lorsque ces instructions sont exécutées par un processeur.

Un troisième aspect de l'invention vise un dispositif de transmission d'un message d'urgence par un véhicule terrestre, comme défini dans la revendication 8.

Un aspect de l'invention vise un véhicule comportant le dispositif selon le troisième aspect de l'invention.

D'autres caractéristiques et avantages de l'invention apparaîtront à l'examen de la description détaillée ci-après, et des dessins annexés sur lesquels :
[Fig.1] illustre un contexte d'application de l'invention ;
[Fig.2] illustre un procédé selon l'invention ;
[Fig.3] illustre une partie des données transmises selon l'invention ;
[Fig.4] illustre un dispositif, selon un mode de réalisation de l'invention.

L'invention est décrite ci-après dans son application, non limitative, au cas d'un véhicule automobile ayant subi un accident de la route. D'autres applications sont naturellement envisageables pour la présente invention. Par exemple, le procédé selon l'invention peut être mis en oeuvre pour le passager d'un minibus ayant fait un malaise, pour la détection d'une surchauffe potentiellement explosive sur un scooter électrique, pour la détection automatique de l'agression d'une personne sur la voie publique, etc.

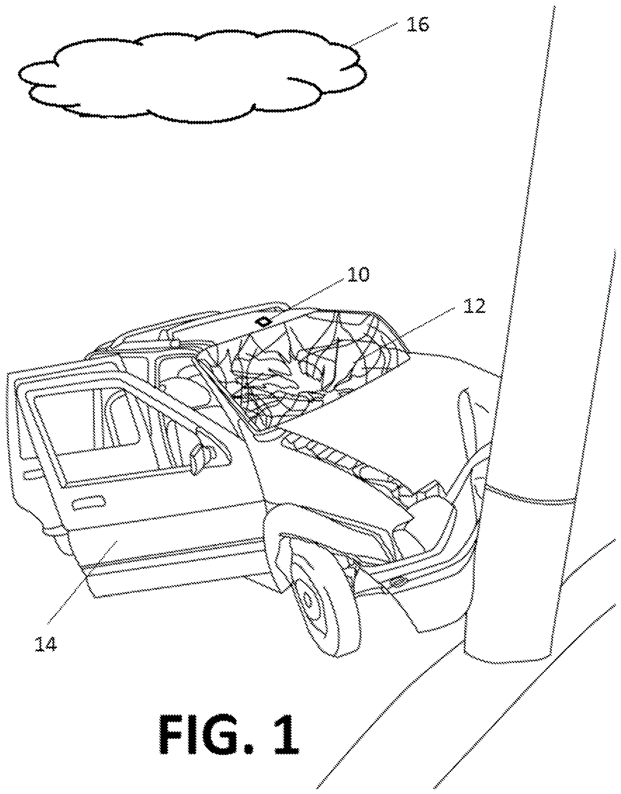

La **figure 1** illustre un véhicule 14 ayant subi un accident de la route.

Le véhicule 14 comporte un système 12 de protection des occupants. Ce système de protection comprend des airbags destinés à protéger les occupants des chocs ayant lieu lors d'un accident de la route. Il peut également comprendre d'autres organes de sécurité tels que des systèmes de gestion de la tension des ceintures de sécurité, de gestion de paramètres de sièges électriques, de déploiement d'un arceau de sécurité sur un véhicule cabriolet, de paramètres de sécurités d'organes du véhicule liés au groupe motopropulseur, etc.

Le véhicule 14 comporte en outre un système d'info-divertissement (non représenté). Un tel système est bien connu et comporte par exemple un écran tactile configuré pour rendre des interactions avec l'un des occupants du véhicule possible. Il est également bien connu de connecter un tel système à un terminal utilisateur, tel qu'un smartphone.

Dans la présente invention, une connexion, directe ou indirecte, entre le terminal utilisateur et un deuxième organe du véhicule 14 est présente. La connexion peut être directe, par exemple entre le terminal utilisateur et le système d'info-divertissement, ou indirecte, par exemple entre le terminal utilisateur relié par une liaison sans-fil avec un autre terminal utilisateur, l'autre terminal utilisateur smartphone étant lui-même connecté au système d'info-divertissement.

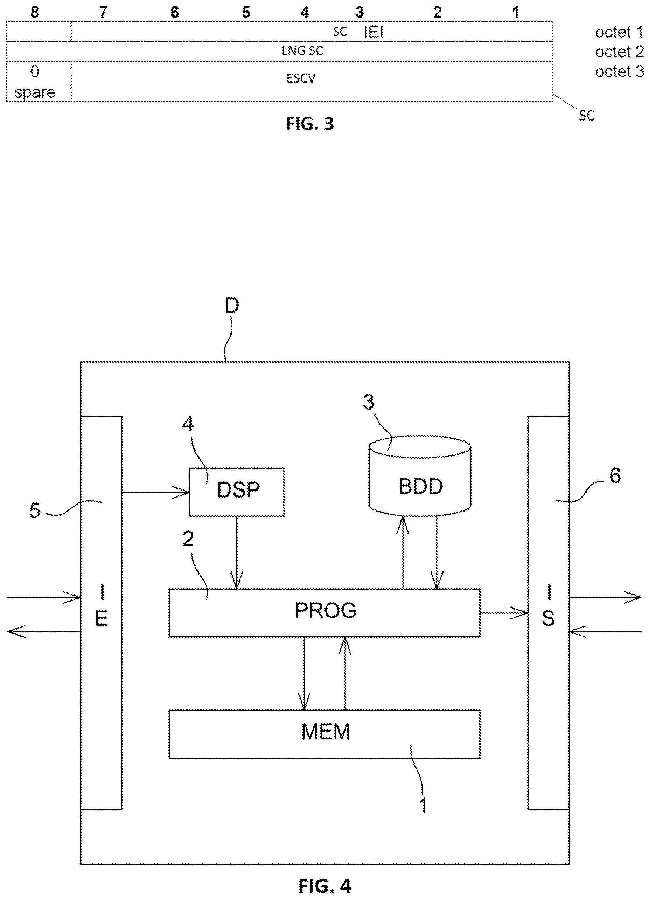

Le deuxième organe du véhicule est le système d'info-divertissement, un dispositif D tel que décrit ci-après en référence à la figure 4, ou tout type d'organe du véhicule 14 apte à être connecté au terminal utilisateur.

La connexion entre le terminal utilisateur et le deuxième organe peut être filaire (USB, ethernet, etc.) ou sans-fil (bluetooth, LTE, wifi, etc.).

Le terminal utilisateur peut être de différents type. Il peut typiquement s'agir d'un smartphone, d'un ordinateur personnel, d'une tablette tactile ou encore d'un objet connecté tel qu'une montre connectée ou tout type d'objet apte à être porté (bracelet, pendentif, vêtement, etc.) par un occupant du véhicule 14.

Un dispositif de communication 10 est en outre prévu sur le véhicule 14. Un tel dispositif rend possible une communication du véhicule 14 avec tout dispositif distant, ici représenté par un nuage 16. Le dispositif 10 communique par différents moyens de communication, il peut ainsi s'agir de communications cellulaires (2G, GSM, 3G, UMTS, 4G, LTE, 5G, etc.), de communications sans-fil courte portée ou moyenne portée (PC5, ITS-G5, wifi, bluetooth, réseau courte-portée ad-hoc, etc.), etc.

Le dispositif distant 16 correspond à toute entité apte à être connecté directement ou non au véhicule 14 et configuré pour traiter des messages d'urgence. Il s'agit par exemple d'un centre de réception des appels d'urgence.

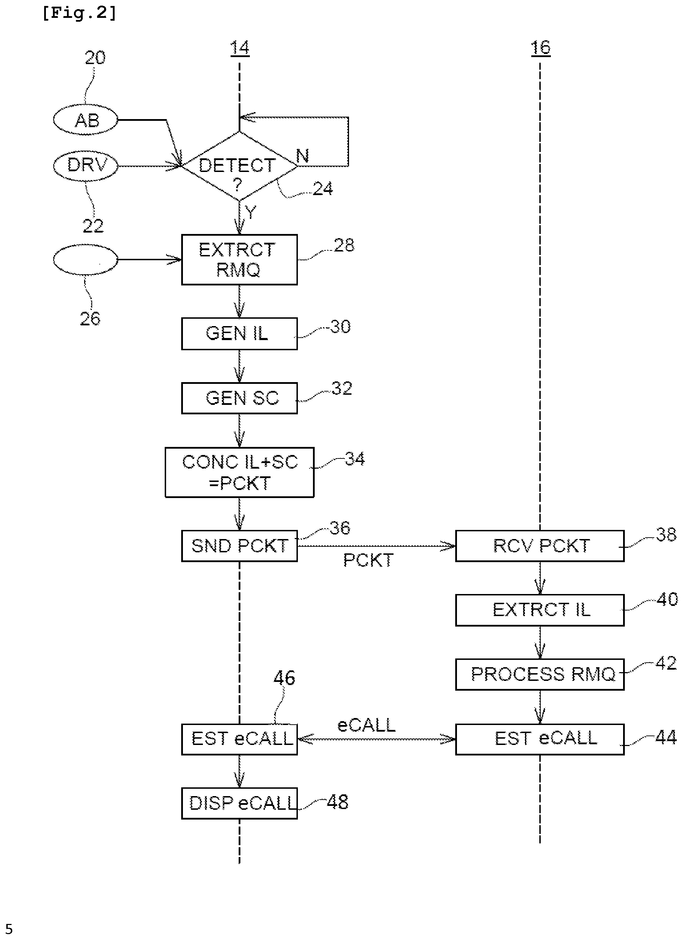

La **figure 2** illustre le procédé, selon un mode de réalisation de l'invention.

A une étape 20, un capteur du véhicule 14 acquiert des données de détection d'accident.

Le capteur est l'un au moins des éléments parmi :
- un capteur de choc situé sur l'un des éléments de la carrosserie du véhicule 14. Un capteur de choc détecte typiquement un enfoncement brutal de l'élément de carrosserie du véhicule ;
- un radar ;
- un lidar ;
- une caméra, par exemple une caméra vidéo multifonction, CVM ;
- un système de communication (par exemple Car2X ou 5G) configuré pour recevoir des informations d'au moins un autre véhicule, une infrastructure, un terminal utilisateur, etc. ;
- un laser ;
- un dispositif configuré pour acquérir une donnée physique de retournement, tel qu'un angle de retournement ou une accélération angulaire. Ce dispositif peut-être un gyroscope, un accéléromètre, la caméra ou encore un système de positionnement par satellite, encore appelé GPS, global positioning system, système de positionnement global en français. Ces dispositifs et leur fonctionnement sont bien connus de l'homme du métier ;
- etc.

Les données brutes acquises par le capteur sont traitées et font l'objet d'une fusion lorsque plusieurs capteurs sont utilisés.

Les données sont ensuite transmises, éventuellement par l'intermédiaire d'un dispositif D décrit ci-après en référence à la figure 4, au système 12 de protection des occupants. Dans un mode de réalisation, les données sont directement interceptées par le dispositif D et traitées par le procédé selon l'invention décrit ci-après en référence à la figure 2. Dans un autre mode de réalisation, les données acquises par le capteur sont transmises au système 12, qui agit afin de protéger les occupants et transmet au dispositif D une alerte de situation d'urgence au dispositif D.

A une étape 22, un occupant du véhicule 14 renseigne une alerte de situation d'urgence manuellement. Pour ce faire, l'occupant a la possibilité d'appuyer sur un bouton spécifique pour déclencher une telle alerte.

Ainsi, un premier organe du véhicule (le capteur, le système 12 ou encore le bouton d'alerte) transmet l'alerte de situation d'urgence qui est détectée par le dispositif D à l'étape 24. Dans un mode de réalisation, la détection de la situation d'urgence est conforme aux prescription imposées par la norme eCall (EN 15722 et EN 16062 notamment).

A une étape 28, une information d'hypoacousie RMQ est reçue. Dans un mode de réalisation particulier, une information d'aphasie est en outre reçue.

L'information d'hypoacousie et, dans le mode de réalisation particulier, l'information d'aphasie, est stockée dans un dispositif du véhicule (par exemple dans le système d'info-divertissement) et transmises au dispositif D à l'étape 28. L'information est par exemple acquise une première fois sur réception d'informations entrées manuellement par un occupant du véhicule, via le système d'info-divertissement, où transférées depuis le terminal utilisateur vers le dispositif D directement, ou vers le dispositif D par l'intermédiaire du système d'info-divertissement.

Dans un mode de réalisation, l'information d'hypoacousie et, dans le mode de réalisation particulier, l'information d'aphasie, est reçue à l'étape 28 suite à une requête émise par le dispositif D vers le système d'info-divertissement ou vers le terminal utilisateur. La requête peut-être directement à destination de l'occupant du véhicule ou à destination du système d'info-divertissement ou du terminal utilisateur pour une transmission automatique depuis le système d'info-divertissement ou le terminal utilisateur de l'information d'hypoacousie/aphasie, l'information d'hypoacousie étant stockée sur le système d'info-divertissement ou sur le terminal utilisateur.

A une étape 30, une donnée IL est générée à partir de l'information d'hypoacousie RMQ extraite à l'étape 28. Dans le cas où une information estimée du nombre d'occupant est également reçue par le deuxième organe, l'information de mouvement est ajoutée à la donnée. Dans un mode de réalisation, la donnée est l'ensemble minimal de données au sens de la norme européenne EN 15722.

A une étape 32, un élément d'information SC comprenant une valeur de catégorie de service d'urgence d'une taille inférieure ou égale à trois octets et configuré pour attribuer à un paquet PCKT une priorité dans le réseau, la priorité étant relative au caractère urgent du message, est généré. Le paquet PCKT comprend l'élément d'information SC et la donnée IL comme cela est expliqué ci-après en référence à l'étape 34.

Une configuration de l'élément d'information SC selon un mode de réalisation est donnée en référence à la **figure 3****.** Sur cette figure, SC présente une taille de trois octets. Le premier octet SC IEI correspond à un identifiant d'élément d'information, le deuxième octet à la longueur de l'élément d'information SC et le troisième à la valeur de catégorie de service d'urgence ESCV. Dans un mode de réalisation, la valeur de catégorie de service d'urgence est d'une taille égale à un octet et présente l'une au moins des configurations suivantes : le sixième bit de l'octet est réglé à un, et/ou le septième bit de l'octet est réglé à un. Si le sixième ou (exclusif) le septième bit de l'octet de ESCV est réglé à un, tous les autres bits de l'octet de ESCV sont réglés à 0.

Selon l'invention, l'étape de détection de la situation d'urgence comporte une détermination d'une information de type de détection de la situation d'urgence, le type de détection correspondant à une détection automatique de l'urgence (voir étape 20) ou à une situation d'urgence manuellement (voir étape 22) renseignée par un occupant du véhicule. La priorité dans ledit réseau est alors en outre relative au type de détection de la situation d'urgence.

En particulier, dans un mode de réalisation, le sixième bit de l'octet ESCV est réglé à un et le septième bit à 0 si l'urgence a été détectée manuellement et le sixième bit de l'octet ESCV est réglé à 0 et le septième bit à un si l'urgence a été détectée automatiquement.

A l'étape 34, l'élément d'information SC et au moins une partie de la donnée IL sont notamment rassemblées dans un paquet PCKT. D'autres éléments, tels que données de signalisation ou encore une information de qualité de service peuvent également être ajoutées au paquet. Il est ici précisé qu'au « au moins une partie de la donnée » est intégré au paquet car ladite donnée peut être répartie dans plusieurs paquets, selon la configuration choisie pour la transmission des paquets (modulation, compression, etc.). Par exemple, le message d'urgence est émis en transmettant une pluralité de paquets, chacun comprenant une partie de la donnée à transmettre. Dans un autre exemple, la transmission du message d'urgence est faite par la transmission d'un unique paquet comportant la totalité de la donnée. Ces différentes possibilités de transmission du ou des paquets du message d'urgence dépend du protocole choisi et sont bien connues de l'homme du métier.

Un exemple de configuration pour la transmission de la donnée dans un ou plusieurs paquets est donné pour la transmission du l'ensemble minimal de données, MSD, tel que défini dans la norme ETSI TS 126 267.

Le paquet PCKT est ensuite envoyé par le véhicule 14, et en particulier par le dispositif de communication 10, à un dispositif distant 16.

Le dispositif distant 16 reçoit le paquet à l'étape 38. La donnée IL est extraite à l'étape 40 et l'information d'hypoacousie RMQ qu'elle contient est traité à l'étape 42. Dans un mode de réalisation, le dispositif distant 16 est compris, directement ou indirectement, dans le centre de réception des appels d'urgence. Le traitement rend possible l'identification de l'information d'hypoacousie RMQ. Dans un mode de réalisation, l'information d'hypoacousie est transmise à l'opérateur prenant en charge l'incident dans le centre de réception des appels d'urgence.

Aux étapes 44 et 46, un appel d'urgence entre le véhicule 14 et le dispositif 16 du centre de réception des appels d'urgence est déclenché.

A l'étape 48, un affichage sur un écran du véhicule d'un texte transcrivant au moins une partie d'un signal de l'appel d'urgence entre le véhicule 14 et le dispositif 16 est mis en oeuvre. Dans un mode de réalisation, le texte affiché est généré par le dispositif D compris dans le véhicule 14. Dans un autre mode de réalisation, le texte affiché est généré par le dispositif distant 16 ou par tout dispositif relié, directement ou indirectement, au dispositif distant 16.

Dans un mode de réalisation, l'intégralité du signal est transcrit. Dans un autre mode de réalisation, une partie seulement du signal est transcrite, par exemple une partie du signal correspondant à un message effectif d'un opérateur du centre de réception des appels d'urgence (cette partie étant identifiée lorsqu'il est détecté que l'opérateur parle) ou une partie du signal expurgée d'informations redondantes ou expurgée des parties ne pouvant être transcrite en texte.

Dans le mode de réalisation particulier où une information d'aphasie est en outre reçue, une étape (non représentée) de réception de données textuelles renseignées par l'occupant du véhicule depuis un clavier du véhicule est mise en oeuvre au niveau du véhicule 14, par exemple au niveau d'un écran tactile du système d'info-divertissement. Le clavier peut ainsi être compris sur un écran tactile du véhicule, l'écran pouvant être l'écran sur lequel le texte est transcrit (étape 48). Le clavier peut aussi être un dispositif physique spécifique raccordé de manière filaire ou non au véhicule 14 (par exemple au système d'info-divertissement ou au dispositif D).

La **figure 4** représente un exemple de dispositif D compris dans le véhicule 14. Ce dispositif D peut être utilisé en tant que dispositif centralisé en charge d'au moins certaines étapes du procédé décrit ci-avant en référence à la figure 2. Il met par exemple en oeuvre au moins certaines étapes de la figure 2 du côté du véhicule 14 ou du dispositif distant 16.

Ce dispositif D peut prendre la forme d'un boitier comprenant des circuits imprimés, de tout type d'ordinateur ou encore d'un smartphone.

Le dispositif D comprend une mémoire vive 1 pour stocker des instructions pour la mise en oeuvre par un processeur 2 d'au moins une étape des procédés tels que décrits ci-avant. Le dispositif comporte aussi une mémoire de masse 3 pour le stockage de données destinées à être conservées après la mise en oeuvre du procédé.

Le dispositif D peut en outre comporter un processeur de signal numérique (DSP) 4. Ce DSP 4 reçoit des données pour mettre en forme, démoduler et amplifier, de façon connue en soi ces données.

Le dispositif comporte également une interface d'entrée 5 pour la réception des données mises en oeuvre par des procédés selon l'invention et une interface de sortie 6 pour la transmission des données mises en oeuvre par les procédés.

La présente invention ne se limite pas aux formes de réalisation décrites ci-avant à titre d'exemples ; elle s'étend à d'autres variantes.

Par exemple, les étapes décrites en référence à la figure 2 l'ont été dans un ordre précis. Un ordre différent est également envisageable. Par exemple, les étapes 30 et 32 peuvent être interverties ou encore effectuées simultanément.

## Revendications

1. Procédé de transmission d'un message d'urgence par un véhicule terrestre (14), la transmission comprenant l'émission d'au moins un paquet dans un réseau de télécommunication, le procédé comprenant les étapes de :
- détection (24) d'une situation d'urgence par au moins un premier organe du véhicule ;
- détermination d'une information d'hypoacousie d'un occupant du véhicule ;
- génération d'une donnée comprenant l'information d'hypoacousie ;
- génération (32) d'un élément d'information comprenant une valeur de catégorie de service d'urgence d'une taille inférieure ou égale à trois octets et configuré pour attribuer au paquet une priorité dans ledit réseau, la priorité étant relative au caractère urgent du message ;
- émission (36) du paquet comprenant au moins une partie de la donnée et l'élément d'information ;
- déclenchement d'un appel d'urgence entre le véhicule et un dispositif distant ;
- affichage sur un écran du véhicule d'un texte transcrivant au moins une partie d'un signal de l'appel d'urgence entre le véhicule et le dispositif distant,
et dans lequel l'étape de détection de la situation d'urgence comporte une détermination d'une information de type de détection de la situation d'urgence, le type de détection correspondant à une détection automatique de l'urgence ou à une situation d'urgence manuellement renseignée par un occupant du véhicule et,
dans lequel la priorité dans ledit réseau est en outre relative au type de détection de la situation d'urgence.

2. Procédé selon la revendication 1, dans lequel le signal transcrit en texte sur l'écran du véhicule est un signal audio.

3. Procédé selon l'une des revendications précédentes, dans lequel une information d'aphasie de l'occupant est en outre déterminée, la donnée comprend en outre l'information d'aphasie, et dans lequel le procédé comporte en outre, après l'étape de déclenchement de l'appel d'urgence, une étape de :
- réception de données textuelles renseignées par l'occupant du véhicule depuis un clavier du véhicule.

4. Procédé selon la revendication 3, dans lequel le clavier est compris sur un écran tactile du véhicule.

5. Procédé selon la revendication 4, dans lequel l'écran tactile du véhicule correspond à l'écran du véhicule.

6. Procédé selon l'une des revendications précédentes, dans lequel la valeur de catégorie de service d'urgence (EMCV) est d'une taille égale à un octet et présente l'une au moins des configurations suivantes :
- le sixième bit de l'octet est réglé à un ;
- le septième bit de l'octet est réglé à un,
et dans lequel la donnée est comprise dans l'ensemble minimal de données au sens de la norme européenne EN 15722.

7. Programme informatique comportant des instructions pour la mise en oeuvre du procédé selon l'une quelconque des revendications précédentes, lorsque ces instructions sont exécutées par un processeur (2).

8. Dispositif (D) de transmission d'un message d'urgence par un véhicule terrestre, le dispositif étant compris dans le véhicule terrestre, la transmission comprenant l'émission d'au moins un paquet dans un réseau de télécommunication, le dispositif comprenant au moins un processeur et au moins une mémoire agencée pour effectuer les opérations de :
- détection (24) d'une situation d'urgence par au moins un premier organe du véhicule ;
- détermination d'une information d'hypoacousie d'un occupant du véhicule ;
- génération d'une donnée comprenant l'information d'hypoacousie ;
- génération (32) d'un élément d'information comprenant une valeur de catégorie de service d'urgence d'une taille inférieure ou égale à trois octets et configuré pour attribuer au paquet une priorité dans ledit réseau, la priorité étant relative au caractère urgent du message ;
- émission (36) du paquet comprenant au moins une partie de la donnée et l'élément d'information ;
- déclenchement d'un appel d'urgence entre le véhicule et un dispositif distant ;
- affichage sur un écran du véhicule d'un texte transcrivant au moins une partie d'un signal de l'appel d'urgence entre le véhicule et le dispositif distant, et
dans lequel l'étape de détection de la situation d'urgence comporte une détermination d'une information de type de détection de la situation d'urgence, le type de détection correspondant à une détection automatique de l'urgence ou à une situation d'urgence manuellement renseignée par un occupant du véhicule et,
dans lequel la priorité dans ledit réseau est en outre relative au type de détection de la situation d'urgence.

9. Véhicule (14) comportant le dispositif selon la revendication 8.

## Patentansprüche

1. Verfahren zur Übermittlung einer Notfallmeldung durch ein Landfahrzeug (14), wobei die Übertragung die Übermittlung mindestens eines Pakets in einem Telekommunikationsnetz umfasst, wobei das Verfahren die Schritte umfasst:
- Erkennen (24) einer Notfallsituation durch mindestens eine erste Komponente des Fahrzeugs;
- Ermittlung von Informationen zum Hörverlust eines Fahrzeuginsassen;
- Generierung von Daten, einschließlich Hypoakusis-Informationen;
- Generierung (32) eines Informationselements, das einen Notdienstkategoriewert mit einer Größe von weniger als oder gleich drei Bytes umfasst und dazu konfiguriert ist, dem Paket eine Priorität in dem Netzwerk zuzuweisen, wobei die Priorität relativ zur Zeichendringlichkeit der Nachricht ist;
- Übertragung (36) des Pakets, das zumindest einen Teil der Daten und das Informationselement umfasst;
- Auslösen eines Notrufs zwischen dem Fahrzeug und einem entfernten Gerät;
- Anzeige eines Textes auf einem Fahrzeugbildschirm, der zumindest einen Teil eines Notrufsignals zwischen dem Fahrzeug und dem entfernten Gerät transkribiert,
und bei dem der Schritt der Erkennung der Notfallsituation eine Bestimmung von Informationen über die Art der Erkennung der Notfallsituation umfasst, wobei die Art der Erkennung einer automatischen Erkennung des Notfalls oder einer von einem Insassen manuell eingegebenen Notfallsituation entspricht Fahrzeug und, wobei die Priorität in dem Netzwerk weiterhin von der Art der Erkennung der Notfallsituation abhängt.

2. Verfahren nach Anspruch 1, bei dem das auf dem Fahrzeugbildschirm in Text umgesetzte Signal ein Audiosignal ist.

3. Verfahren nach einem der vorhergehenden Ansprüche, bei dem weiterhin Aphasie-Informationen des Insassen ermittelt werden, die Daten weiterhin die Aphasie-Informationen umfassen, und bei dem das Verfahren nach dem Schritt des Auslösens des Notrufs weiterhin einen Schritt umfasst von :
- Empfang von Textdaten, die der Fahrzeuginsasse über eine Fahrzeugtastatur eingegeben hat.

4. Verfahren nach Anspruch 3, wobei die Tastatur auf einem Touchscreen des Fahrzeugs enthalten ist.

5. Verfahren nach Anspruch 4, wobei der Touchscreen des Fahrzeugs dem Bildschirm des Fahrzeugs entspricht.

6. Verfahren nach einem der vorhergehenden Ansprüche, bei dem der Emergency Service Category Value (EMCV) eine Größe gleich einem Byte aufweist und mindestens eine der folgenden Konfigurationen aufweist:
- das sechste Bit des Bytes wird auf eins gesetzt;
- das siebte Bit des Bytes wird auf eins gesetzt,
und in dem die Daten zum Mindestdatensatz im Sinne der europäischen Norm EN 15722 gehören.

7. Computerprogramm mit Anweisungen zur Durchführung des Verfahrens nach einem der vorhergehenden Ansprüche, wenn diese Anweisungen von einem Prozessor (2) ausgeführt werden.

8. Gerät (D) zum Übertragen einer Notfallmeldung durch ein Landfahrzeug, wobei das Gerät im Landfahrzeug enthalten ist, die Übertragung die Übertragung mindestens eines Pakets in einem Telekommunikationsnetzwerk umfasst, das Gerät mindestens einen Prozessor umfasst und mindestens ein Speicher, der so angeordnet ist, dass er die folgenden Operationen ausführt:
- Erkennen (24) einer Notfallsituation durch mindestens eine erste Komponente des Fahrzeugs;
- Ermittlung von Informationen zum Hörverlust eines Fahrzeuginsassen;
- Generierung von Daten, einschließlich Hypoakusis-Informationen;
- Generierung (32) eines Informationselements, das einen Notdienstkategoriewert mit einer Größe von weniger als oder gleich drei Bytes umfasst und dazu konfiguriert ist, dem Paket eine Priorität in dem Netzwerk zuzuweisen, wobei die Priorität relativ zur Zeichendringlichkeit der Nachricht ist;
- Übertragung (36) des Pakets, das zumindest einen Teil der Daten und das Informationselement umfasst;
- Auslösen eines Notrufs zwischen dem Fahrzeug und einem entfernten Gerät;
- Anzeige eines Textes auf einem Fahrzeugbildschirm, der zumindest einen Teil eines Signals des Notrufs zwischen dem Fahrzeug und dem entfernten Gerät überträgt, und bei dem der Schritt der Erkennung der Notfallsituation eine Bestimmung von Informationen über die Art der Erkennung umfasst Notfallsituation, wobei die Art der Erkennung der automatischen Erkennung des Notfalls oder einer von einem Fahrzeuginsassen manuell eingegebenen Notfallsituation entspricht und,
wobei die Priorität in dem Netzwerk weiterhin von der Art der Erkennung der Notfallsituation abhängt.

9. Fahrzeug (14) umfassend die Vorrichtung nach Anspruch 8.

## Claims

1. Method for transmitting an emergency message by a land vehicle (14), the transmission comprising the transmission of at least one packet in a telecommunications network, the method comprising the steps of:
- detection (24) of an emergency situation by at least one first component of the vehicle;
- determination of hypoacusis information for a vehicle occupant;
- generation of data including hypoacusis information;
- generation (32) of an information element comprising an emergency service category value of a size less than or equal to three bytes and configured to assign a priority to the packet in said network, the priority being relative to the character urgency of the message;
- transmission (36) of the packet comprising at least part of the data and the information element;
- triggering an emergency call between the vehicle and a remote device;
- display on a vehicle screen of a text transcribing at least part of an emergency call signal between the vehicle and the remote device,
and in which the step of detecting the emergency situation comprises a determination of information on the type of detection of the emergency situation, the type of detection corresponding to automatic detection of the emergency or to an emergency situation. emergency manually entered by an occupant of the vehicle and,
wherein the priority in said network is further relative to the type of detection of the emergency situation.

2. Method according to claim 1, in which the signal transcribed into text on the vehicle screen is an audio signal.

3. Method according to one of the preceding claims, in which aphasia information of the occupant is further determined, the data further comprises the aphasia information, and in which the method further comprises, after The step of triggering the emergency call, a step of:
- reception of textual data entered by the occupant of the vehicle from a vehicle keyboard.

4. Method according to claim 3, wherein the keyboard is included on a touch screen of the vehicle.

5. Method according to claim 4, wherein the touch screen of the vehicle corresponds to the screen of the vehicle.

6. Method according to one of the preceding claims, in which the emergency service category value (EMCV) is of a size equal to one byte and has at least one of the following configurations:
- the sixth bit of the byte is set to one;
- the seventh bit of the byte is set to one,
and in which the data is included in the minimum data set within the meaning of European standard EN 15722.

7. Computer program comprising instructions for implementing the method according to any one of the preceding claims, when these instructions are executed by a processor (2).

8. Device (D) for transmitting an emergency message by a land vehicle, the device being included in the land vehicle, the transmission comprising the transmission of at least one packet in a telecommunications network, the device comprising at least one processor and at least one memory arranged to perform the operations of:
- detection (24) of an emergency situation by at least one first component of the vehicle;
- determination of hearing loss information for a vehicle occupant;
- generation of data including hypoacusis information;
- generation (32) of an information element comprising an emergency service category value of a size less than or equal to three bytes and configured to assign the packet a priority in said network, the priority being relative to the character urgency of the message;
- transmission (36) of the packet comprising at least part of the data and the information element;
- triggering an emergency call between the vehicle and a remote device;
- display on a vehicle screen of a text transcribing at least part of a signal of the emergency call between the vehicle and the remote device, and in which the step of detecting the emergency situation comprises a determination of information on the type of detection of the emergency situation, the type of detection corresponding to automatic detection of the emergency or to an emergency situation manually entered by an occupant of the vehicle and,
wherein the priority in said network is further relative to the type of detection of the emergency situation.

9. Vehicle (14) comprising the device according to claim 8.
